# FASCICULE DE BREVET EUROPEEN

(11) **EP 1 902 347 B1**
(45) Date de publication et mention de la délivrance du brevet: **20.09.2017**
(21) Numéro de dépôt: 06777660.9
(22) Date de dépôt: 07.07.2006
(51) Int. Cl.: G01C 23/00, G05D 1/00

(54) **DISPOSITIF OPTOELECTRONIQUE D'AIDE AU ROULAGE POUR AERONEF COMPORTANT UNE SYMBOLOGIE DEDIEE**
OPTOELEKTRISCHE VORRICHTUNG ZUR UNTERSTÜTZUNG DES ROLLENS EINES FLUGZEUGS MIT ZWECKBESTIMMTER BILDERZEUGUNG
OPTOELECTRONIC DEVICE FOR ASSISTING AIRCRAFT TAXIING COMPRISING DEDICATED IMAGING

(30) Priorité: 08.07.2005 FR 0507323
(43) Date de publication de la demande: 26.03.2008
(73) Titulaire: Thales, 92400 Courbevoie (FR)
(72) Inventeur: DUBOURG, Bernard, F-33185 Le Haillan (FR); FILLIATRE, Eric, F-33700 Merignac (FR); DELFOUR, Nicolas, F-33185 Le Haillan (FR)
(74) Mandataire: Bréda, Jean-Marc
(86) Numéro de dépôt international: PCT/EP2006/064030
(87) Numéro de publication internationale: WO 2007/006762

(56) Documents cités:
- WO-A-99/04304
- WO-A-03/048687
- FR-A1- 2 866 960

## Description

Le domaine de l'invention est celui des dispositifs optoélectroniques d'aide au roulage pour aéronef, comportant un collimateur dit Tête Haute permettant la présentation d'informations dans le champ visuel du pilote. Elle s'applique tout particulièrement aux aéronefs civils de grande taille de type Boeing 747 ou Airbus A380.

Il est important que les phases de roulage au sol des aéronefs dans un aéroport puissent se faire en toute sécurité quelques soient la densité du trafic aérien ou les conditions de visibilité. Un train d'atterrissage d'aéronef a souvent un encombrement important et occupe une partie notable de la largeur des voies de circulation. Par exemple, la largeur du train d'atterrissage d'un Airbus A380 dépasse 14 mètres. Un des objectifs majeurs pour assurer la sécurité est que, pendant le roulage, l'ensemble du train d'atterrissage reste parfaitement sur la voie de circulation afin d'éviter que l'aéronef ne se rapproche trop d'obstacles à proximité de la voie de circulation ou que le train d'atterrissage n'aille sortir de la piste.

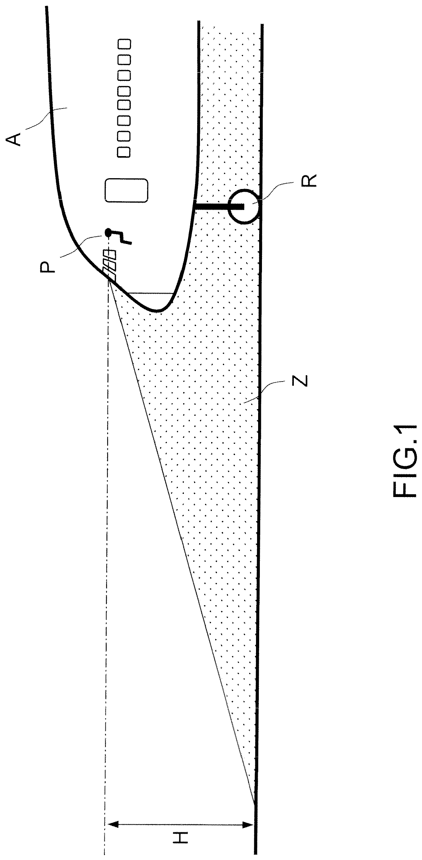

Un des points délicats du roulage est la négociation des virages. En effet, comme illustré en figure 1, dans un avion A de premier niveau, le pilote P se situe à une hauteur H de plusieurs mètres au-dessus du sol avec une zone Z de non visibilité en-dessous de l'appareil importante. Ainsi, dans un Airbus A380, le pilote est placé à 7 mètres au-dessus du sol et la zone Z de non visibilité en grisé sur la figure 1 s'étend sur 25 mètres. D'autre part, la grande distance séparant le train principal d'atterrissage et la roulette avant R de l'appareil ne facilite pas la manoeuvre. Dans un Airbus A380, cette dernière distance atteint 30 mètres.

Les aéronefs modernes comportent un système d'aide au roulage comprenant notamment un collimateur Tête Haute encore appelé HUD, acronyme anglo-saxon de Head-Up Display. Un collimateur Tête Haute comprend classiquement une source d'images générant de la symbologie, une optique de collimation et un combineur optique placé dans le champ visuel du pilote. Le collimateur donne ainsi une image virtuelle à l'infini de la symbologie superposée au paysage extérieur. WO 99/04304 décrit un dispositif d' aide au roulage pour aéronef. La symbologie donne des informations sur la trajectoire à suivre et un certain nombre de consignes. Elle est générée par un calculateur dédié au collimateur. Dans le cas du système d'aide au roulage, les informations sont fournies au calculateur du collimateur par :
- le système principal de navigation, notamment pour les informations de cap, de vitesse au sol et de position ;
- le calculateur de navigation aéroportuaire, à partir :
   - des consignes de circulation fournies par le contrôleur aérien, suite de segments de voies de circulation que doit emprunter l'avion pendant la phase de roulage, et
   - des informations contenues dans une base de données relative à la plate-forme aéroportuaire sur laquelle se trouve l'avion. Il existe 3 catégories de base de données donnant la description des aéroports, appelées "*Coarse*", "*Medium*" et "*Fine*", définies dans le document RTCA DO272 / EUROCAE ED99, intitulé "Users Requirements for Aerodrome Mapping Information". Pour ce type d'application, les bases de données utilisées sont de la catégorie "*Fine*".

La capacité de surveillance globale de la situation de l'aéronef et la précision des manoeuvres à effectuer manuellement dépendent directement des caractéristiques et de l'ergonomie des divers symboles présentés au pilote à travers son HUD.

Classiquement, on sépare les symboles affichés dans un collimateur Tête Haute en deux grandes catégories :
- Les symboles dits 2D encore appelés non conformes qui fournissent au pilote des informations de navigation qui sont, par exemple :
   - la ligne d'horizon ;
   - la destination finale du cheminement
   - le prochain point d'arrêt appelé en terminologie anglo-saxonne « clairance limite » ;
   - le temps estimé ou la distance de l'aéronef jusqu'au point final de cheminement ;
   - les changements de direction à effectuer ;
   - la vitesse sol de l'aéronef ;
   - le cap magnétique ;
- les symboles dits 3D ou conformes qui donnent une meilleure perception de l'environnement de l'aéronef. Ces symboles sont particulièrement utiles en cas de visibilité dégradée, par exemple pour la navigation de nuit ou par mauvaises conditions météorologiques. Ce sont essentiellement des symboles représentant la voie de circulation. L'image virtuelle de cette symbologie fournie par le collimateur se superpose exactement à la position réelle de la voie de circulation, la position de l'aéronef par rapport à la voie de circulation étant parfaitement connue au mètre près au moyen des systèmes de navigation.

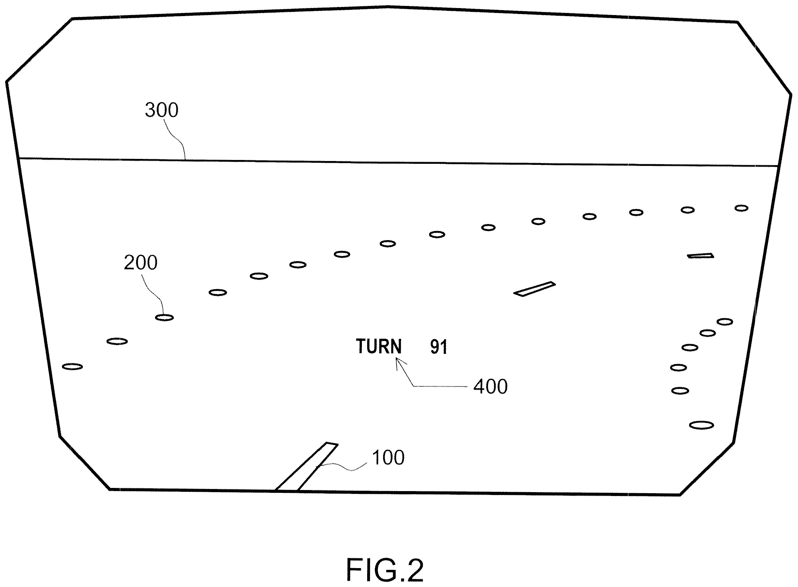

La figure 2 donne un exemple de symbologie d'aide au roulage selon l'art antérieur lorsque l'aéronef aborde un virage. Cette symbologie a été simplifiée et seuls les éléments nécessaires à l'invention ont été conservés. Le cadre en traits gras de la figure 2 et des figures suivantes représente les limites angulaires du combineur optique. Cette symbologie comprend :
- Une représentation conforme en 3D dans laquelle les symboles présentés se superposent exactement aux éléments extérieurs qu'ils représentent. Ces symboles sont :
   - Des marques axiales 100 de voie de circulation de forme rectangulaire. Ces rectangles sont représentés en perspective, leur orientation et leur taille dépendant de leur position par rapport à l'aéronef. ;
   - Des marques latérales 200 de sécurité de voie de circulation de forme circulaire et qui, bien entendu, apparaissent sous forme d'ellipses dans la figure 2 ;
   - La ligne d'horizon 300 ;
   - Une représentation non conforme en 2D. A titre d'exemple, un changement de direction 400 est représenté, il est symbolisé par le texte TURN suivi de l'indication du nombre de mètres à parcourir avant le prochain virage de l'aéronef, en l'occurrence 91 mètres sur la figure 2.

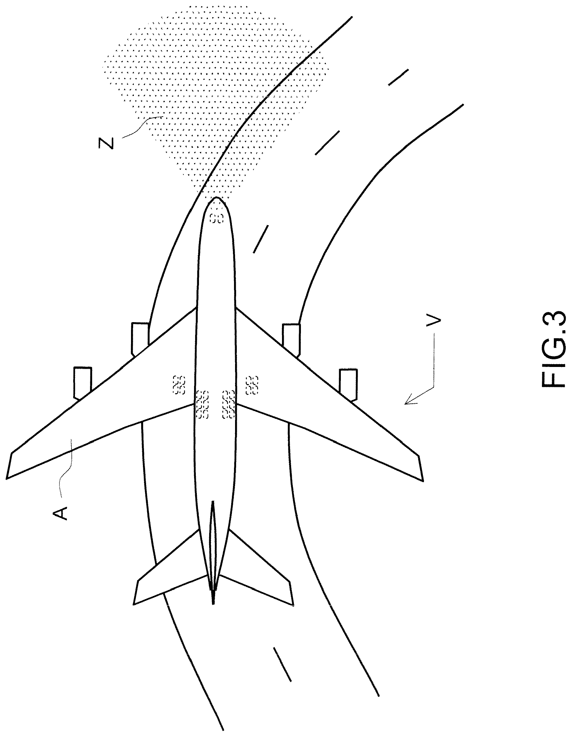

Cette représentation convient tant que l'appareil se trouve à l'entrée du virage ou tant que les conditions de visibilité sont bonnes. Cependant, lorsque l'appareil est au milieu d'un virage, cette représentation devient insuffisante. Comme on le voit sur la figure 3, il est parfaitement possible qu'au milieu d'un virage V, compte-tenu de la zone Z de non visibilité représentée par la zone grisée et située devant l'appareil A, la symbologie affichée ne comporte plus aucune marque latérale de sécurité exploitable. Si, d'autre part, la visibilité est réduite, le pilote se trouve alors totalement dénué d'informations et de repères visuels.

L'invention se situe dans le cadre de cette fonction d'aide au roulage. Elle s'applique tout particulièrement lorsque l'aéronef franchit un virage. L'objet de l'invention est de présenter, dans le HUD, un ensemble de symboles ergonomiques permettant d'informer le pilote de la trajectoire à suivre dans un virage ainsi que de la situation exacte de son appareil sur la voie de circulation, lui permettant d'assurer le roulage en toute sécurité, y compris par mauvaises conditions météorologiques.

Plus précisément, l'invention a pour objet un dispositif optoélectronique d'aide au roulage pour aéronef situé sur une voie de circulation d'aéroport, ledit dispositif comprenant au moins un collimateur Tête Haute et un calculateur dédié audit collimateur, ledit calculateur comportant des moyens d'affichage sur le collimateur au moins de symboles dits 3D, superposés à ladite voie de circulation et représentant des marques latérales de sécurité, disposées à intervalles réguliers et situées de part et d'autre de la ligne médiane de la voie de circulation à égale distance de celle-ci, caractérisé en ce que, dans les virages, lesdites marques sont des plots de hauteur variable, matérialisant la limite de la voie de circulation.

Avantageusement, les plots de hauteur variable sont situés uniquement à l'extérieur des virages, la hauteur maximale virtuelle des plots est inférieure à la hauteur à laquelle se trouvent les yeux du pilote au-dessus de la voie de circulation, de façon que tous les plots apparaissent dans le collimateur sous la ligne d'horizon ; les plots sont substantiellement de forme cylindrique, la génératrice du cylindre étant perpendiculaire à la voie de circulation.

Avantageusement, de l'entrée du virage à la sortie du virage, la hauteur des plots augmente d'abord progressivement, puis reste constante, puis décroît progressivement.

De plus, le calculateur génère également un premier ensemble de symboles 2D représentant un changement de direction, comprenant les éléments de base suivants :
- Une flèche de direction courbe indiquant le sens du virage ainsi que l'angle de la courbe dudit virage ;
- Le nom de la voie de circulation suivante, ledit nom étant placé à l'extrémité de la flèche de direction courbe.;
- L'indication textuelle de virage composée du texte "TURN" et de la distance restante avant d'aborder le virage exprimée en mètres.

Dans ce cas, la flèche de direction courbe diminue lorsque l'aéronef progresse dans la courbe, l'indication textuelle de virage se déplaçant de façon à rester toujours positionnée à l'extrémité de la flèche courbe. Ce premier ensemble de symboles est affiché lorsque l'aéronef est à moins de 200 mètres d'une courbe et disparaît à la fin de cette courbe.

Le calculateur peut générer également un second ensemble de symboles 2D représentant la situation du train principal de l'aéronef et comprenant les éléments de base suivants :
- Une maquette du train principal de l'aéronef comportant notamment les boggies ;
- Une représentation de la voie de circulation à la même échelle que celle de la maquette du train principal ;
- Des index matérialisant la position idéale des boggies externes du train principal lorsque l'avion est centré sur la voie de circulation.

La maquette du train principal occupe alors une position fixe dans le collimateur, la représentation de la voie de circulation et les index étant mobiles. La maquette du train principal clignote lorsque le train principal se trouve trop près du bord de la voie de circulation et la représentation de la voie de circulation est constituée d'un trait horizontal limité par deux traits verticaux matérialisant les limites de sécurité de la voie de circulation.

Enfin, le calculateur peut générer également un troisième ensemble de symboles 2D représentant en vue de dessus la situation de l'aéronef sur la voie de circulation et comprenant les éléments de base suivants représentés à la même échelle :
- Des marques axiales disposées à intervalles réguliers en forme de rectangle représentant la ligne médiane de la voie de circulation ;
- Des marques latérales de sécurité de voie de circulation, suite de plots disposés à intervalles réguliers, situés de part et d'autre de la ligne médiane de la voie de circulation à égale distance de celle ci ;
- Une maquette du train d'atterrissage en vue de dessus, comportant l'ensemble du train principal et la roulette avant de l'aéronef ;
- Une maquette avion représentant en vue de dessus l'aéronef.

Dans ce cas, les différents boggies du train principal et la roulette avant de l'aéronef sont reliés par des segments de droite.

Ce troisième ensemble est généré pour compenser la perte de référence lorsque les symboles 3D représentant des marques latérales de sécurité ne sont plus visibles en nombre suffisant dans le collimateur en raison de la position du poste de pilotage dans les virages. Un critère d'affichage de cette vue est, par exemple, la disparition totale dans le champ du collimateur des marques axiales des voies de circulation. On anticipe ainsi la perte de référence liée à la présentation de la limite extérieure du virage.

L'invention sera mieux comprise et d'autres avantages apparaîtront à la lecture de la description qui va suivre donnée à titre non limitatif et grâce aux figures annexées parmi lesquelles :
- La figure 1 représente une vue de l'avant d'un aéronef avec sa zone de non visibilité ;
- La figure 2 représente une symbologie affichée dans un collimateur selon l'art antérieur ;
- La figure 3 représente une vue de dessus d'un avion abordant un virage sur une voie de circulation ;
- La figure 4 représente une symbologie selon l'invention dans une première configuration ;
- La figure 5 représente une symbologie selon l'invention dans une seconde configuration.

La symbologie selon l'invention permet de toujours fournir au pilote le les informations nécessaires permettant d'assurer le roulage de son aéronef en toute sécurité, y compris dans les virages.

Cette symbologie comprend au moins:
- Une représentation conforme en 3D dans laquelle les symboles présentés se superposent exactement aux éléments extérieurs qu'ils représentent. Ces symboles sont :
   - Des marques axiales de voie de circulation
   - Des marques latérales de sécurité de voie de circulation
- Une représentation non conforme en 2D qui permet de fournir au pilote des informations complémentaires lorsque la représentation en 3D n'est pas suffisante pour bien apprécier la situation de l'avion sur les voies de circulation. Ces symboles concernent essentiellement :
   - Un changement de direction ;
   - la situation du train principal ;
   - la situation en virage de l'avion.

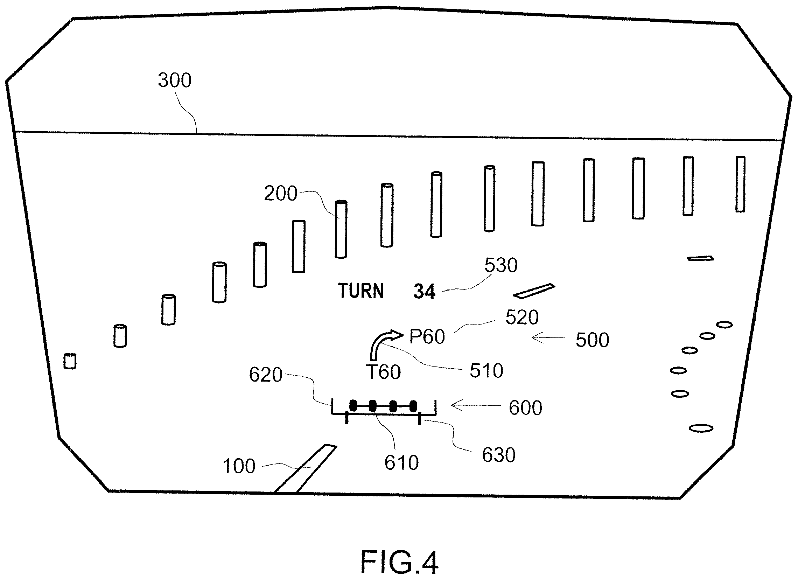

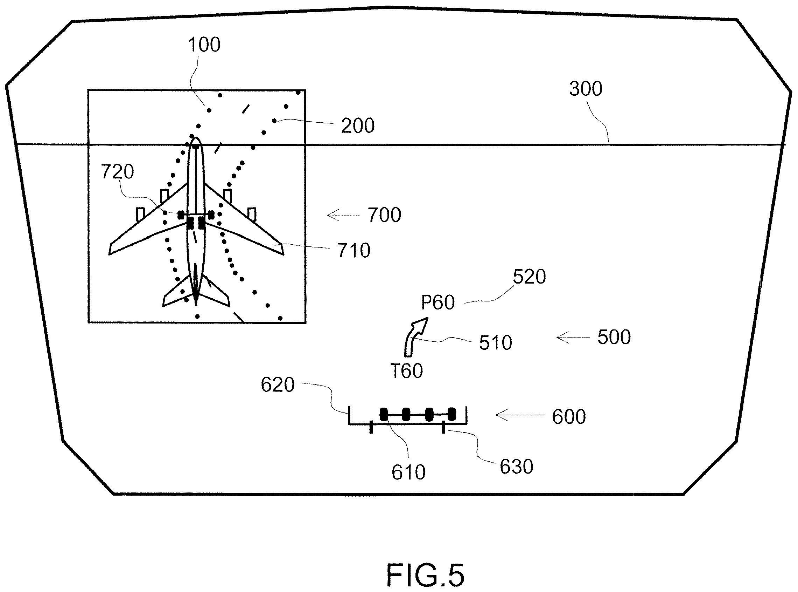

Bien entendu, la taille angulaire des symboles projetés à l'infini est adaptée pour que les symboles soient facilement lisibles. On trouvera en figures 4 et 5 des exemples de cette symbologie. Elle est détaillée ci-dessous :

### Marques axiales 100 de voies de circulation

Les marques axiales de voies de circulation sont tracées en 3D de façon à être conformes à la vision extérieure du paysage. C'est une suite de formes rectangulaires disposées à intervalles réguliers, qui se superpose au marquage au sol matérialisant la ligne axiale de voie de circulation.

### Marques latérales 200 de sécurité de voie de circulation

Les marques latérales de sécurité de voie de circulation sont tracées en 3D de façon à être conformes à la vision extérieure du paysage. Dans les virages, ces marques sont des plots de hauteur variable disposés à l'extérieur du virage, à intervalles réguliers, matérialisant la limite de la voie de circulation à ne pas dépasser. Le pilote conserve ainsi, lorsqu'il aborde une courbe, une référence de la limite extérieure de la voie de circulation le plus longtemps possible malgré l'angle mort de vision dû à la hauteur et à la position avancée du poste de pilotage par rapport à l'ensemble du train d'atterrissage de l'avion.

La hauteur des plots augmente progressivement pendant la première partie de la courbe puis reste constante jusqu'à la fin de celle ci permettant au pilote de mieux apprécier l'angle et la longueur de cette courbe. Elle diminue ensuite dans la ligne droite suivant la courbe.

En ligne droite et pour la représentation de l'intérieur du virage, la hauteur des plots représentant les marques latérales est nulle. Leur représentation est donc un cercle. Ainsi, on évite de surcharger inutilement la symbologie présentée dans le collimateur Tête Haute.

La hauteur maximale des plots est adaptée à chaque type d'appareil pour tenir compte des caractéristiques de chaque avion et des contraintes pour manoeuvrer celui ci dans les courbes de façon à maintenir l'ensemble du train d'atterrissage sur la voie de circulation. Il est préférable que la hauteur maximale virtuelle des plots soit inférieure à la hauteur à laquelle se trouvent les yeux du pilote au-dessus de la voie de circulation, de façon que tous les plots apparaissent dans le collimateur sous la ligne d'horizon, ce qui permet de laisser dégager l'horizon de toute symbologie.

Suivant la taille de chaque avion, le nez de l'appareil se trouve plus ou moins prêt de la limite des voies de circulation. Pour certains appareils très gros porteurs, le nez peut ainsi se retrouver au dessus des surfaces extérieures aux voie de circulation. On peut alors envisager d'incliner les plots vers l'extérieur du virage afin de conserver le sommet des plots toujours visible, même lorsque la position du pilote servant de référence à l'affichage se trouve au delà de la limite extérieure du virage.

### Ensemble de symboles 500 en 2D représentant un changement de direction

L'ensemble de symboles représentant un changement de direction est composé des éléments de base suivants :
- une flèche 510 de direction courbe indiquant le sens du virage ainsi que l'angle de la courbe ;
- Le nom 520 de la voie de circulation suivante ;
- L'indication textuelle 530 de virage composée du texte "TURN" et de la distance restante exprimée en mètres.

Cet ensemble apparaît lorsque l'avion approche à moins de 200 mètres d'une courbe et disparaît à la fin de cette courbe.

L'indication textuelle de virage est présentée lorsque l'avion approche du début d'une courbe et disparaît lorsque l'avion entre dans la courbe.

La flèche de direction courbe diminue lorsque l'avion progresse dans la courbe permettant ainsi au pilote de connaître la position de son appareil dans la courbe. Le nom de la voie de circulation suivante se déplace en fonction de la situation de l'avion dans la courbe en restant toujours positionné à l'extrémité de la flèche courbe.

Lorsque l'avion sort du virage, la flèche courbe disparaît complètement et seul le nom de la voie de circulation sur laquelle se trouve désormais l'appareil est affiché.

### Ensemble de symboles 600 en 2D représentant la situation du train principal

L'ensemble de symboles représentant la situation du train principal est composé des éléments de base suivants :
- Une maquette 610 du train principal de l'aéronef comportant notamment les boggies ;
- Une représentation 620 de la voie de circulation à la même échelle que celle de la maquette du train principal ;
- Des index 630 matérialisant la position idéale des boggies externes du train principal lorsque l'avion est centré sur la voie de circulation.

Cette représentation est réalisée dans le repère de l'appareil. Par conséquent, la maquette du train principal occupe une position fixe dans le collimateur, la représentation de la voie de circulation et les index étant mobiles.

Ladite maquette du train principal clignote lorsque le train principal se trouve trop près du bord de la voie de circulation. La représentation de la voie de circulation est constituée de façon conventionnelle d'un trait horizontal limité par deux traits verticaux matérialisant les limites de sécurité de la voie de circulation.

Les index peuvent être, par exemple, de petits traits verticaux.

Le pilote peut ainsi apprécier au mieux la situation du train principal par rapport à la voie de circulation sur laquelle se trouve son appareil et en déduire les manoeuvres à faire pour maintenir l'appareil dans le domaine du roulage.

### Ensemble de symboles 700 en 2D représentant la situation en virage de l'avion

Il s'agit d'une représentation en vue de dessus de la situation de l'avion sur les voies de circulation. Cet ensemble de symboles est constitué des éléments suivants :
- Des marques 100 disposées à intervalles réguliers en forme de rectangle représentant la ligne médiane de la voie de circulation ;
- Des marques latérales 200 de sécurité de voie de circulation, suite de plots disposés à intervalles réguliers, situés de part et d'autre de la ligne médiane de la voie de circulation à égale distance de celle ci ;
- Une maquette 710 du train d'atterrissage en vue de dessus, comportant l'ensemble du train principal et la roulette avant de l'aéronef ;
- Une maquette avion 720 représentant en vue de dessus l'aéronef.

Dans ce cas, les différents boggies du train principal et la roulette avant de l'aéronef sont reliés par des segments de droite.

Ce troisième ensemble est généré pour compenser la perte de référence lorsque les symboles 3D représentant des marques latérales de sécurité ne sont plus visibles en nombre suffisant dans le collimateur en raison de la position du poste de pilotage dans les virages. Un critère d'affichage de cette vue est par exemple la disparition totale des marques axiales de voie de circulation dans le champ du collimateur, permettant ainsi d'anticiper la perte de référence liée à la présentation de la limite extérieure du virage.

L'ensemble des informations présentées ci-dessus communique ainsi au pilote en permanence la position exacte de son avion sur la voie de circulation. Il peut alors anticiper les prochaines manoeuvres à effectuer, assurant ainsi de meilleures performances et une sécurité accrue.

En outre, dans les phases de roulage par mauvaise visibilité, l'aspect temporel du contrôle de l'avion par l'équipage devient crucial et cette nouvelle symbologie présente l'avantage :
- d'augmenter le niveau global de surveillance de la situation,
- d'améliorer la capacité de réaction du pilote.

A titre d'exemples non limitatifs, les figures 4 et 5 présentent deux exemples d'application de la symbologie selon l'invention en conditions de roulage.

Sur la figure 4, la symbologie présentée comprend :
- L'axe central de la voie de circulation matérialisé par des segments 100 ;
- La limite de sécurité du bord de la voie de circulation matérialisée à l'extérieur par des plots en hauteur 200 et par des plots circulaires à l'intérieur du virage.

Elle donne les informations suivantes :
- l'avion roule actuellement sur la voie de circulation notée T60, il approche d'un virage à 90 degré vers la droite. Le virage est distant de 34 mètres. La voie de circulation suivante est la P60 ;
- le train principal de l'avion se trouve bien centré par rapport à l'axe central de la voie de circulation.

Sur la figure 5, L'appareil étant très engagé dans le virage, le poste de pilotage se trouve au dessus du bord de la voie de circulation et les symboles associés à la voie de circulation ne sont plus présents dans le champ visuel du HUD. Aussi, la symbologie présentée donne les informations suivantes :
- L'aéronef se trouve dans un virage. La flèche de direction indique qu'il reste environ un angle d'environ 45 degré pour terminer le virage ;
- le train principal de l'avion se trouve très proche du bord droit de la voie de circulation. Dans ce cas, la maquette du train principal clignote.
- La vue de dessus présente la situation de l'aéronef par rapport à la voie de circulation. Elle permet d'informer le pilote de la situation exacte de son aéronef par rapport à la voie de circulation.

## Revendications

1. Dispositif optoélectronique d'aide au roulage pour aéronef situé sur une voie de circulation d'aéroport, ledit dispositif comprenant au moins un collimateur Tête Haute et un calculateur dédié audit collimateur ; ledit calculateur comportant des moyens d'affichage sur le collimateur au moins de symboles dits 3D, superposés à ladite voie de circulation et représentant des marques latérales de sécurité, disposées à intervalles réguliers et situées de part et d'autre de la ligne médiane de la voie de circulation à égale distance de celle-ci, **caractérisé en ce que**, dans les virages, lesdites marques sont des plots (200) de hauteur variable, matérialisant la limite de la voie de circulation, lesdits plots étant dans une représentation conforme, c'est-à-dire se superposant exactement aux éléments extérieurs qu'ils représentent.

2. Dispositif optoélectronique selon la revendication 1, **caractérisé en ce que** les plots (200) de hauteur variable sont situés uniquement à l'extérieur des virages.

3. Dispositif optoélectronique selon la revendication 1, **caractérisé en ce que** la hauteur maximale virtuelle des plots est inférieure à la hauteur à laquelle se trouvent les yeux du pilote au-dessus de la voie de circulation, de façon que tous les plots (200) apparaissent dans le collimateur sous la ligne d'horizon (300).

4. Dispositif optoélectronique selon la revendication 1, **caractérisé en ce que** les plots (200) sont substantiellement de forme cylindrique, la génératrice du cylindre étant perpendiculaire à la voie de circulation.

5. Dispositif optoélectronique selon la revendication 1, **caractérisé en ce que**, de l'entrée du virage à la sortie du virage, la hauteur des plots (200) augmente d'abord progressivement, puis reste constante, puis décroît progressivement.

6. Dispositif optoélectronique selon la revendication 1, **caractérisé en ce que** le calculateur génère également un premier ensemble (500) de symboles 2D représentant un changement de direction, comprenant les éléments de base suivants :
• Une flèche de direction courbe (510) indiquant le sens du virage ainsi que l'angle de la courbe ;
• Le nom de la voie de circulation suivante (520), ledit nom étant placé à l'extrémité de la flèche de direction courbe ;
• L'indication textuelle de virage (530) composée du texte "TURN" et de la distance restante avant d'aborder le virage exprimée en mètres.

7. Dispositif optoélectronique selon la revendication 6, **caractérisé en ce que** la flèche de direction courbe (510) diminue lorsque l'aéronef progresse dans la courbe, le nom de la voie de circulation (520) se déplaçant de façon à rester toujours positionné à l'extrémité de la flèche courbe.

8. Dispositif optoélectronique selon la revendication 6, **caractérisé en ce que** le premier ensemble de symboles est affiché lorsque l'aéronef est à moins de 200 mètres d'une courbe et disparaît à la fin de cette courbe.

9. Dispositif optoélectronique selon la revendication 1, **caractérisé en ce que** le calculateur génère également un second ensemble de symboles 2D (600) représentant la situation du train principal de l'aéronef et comprenant les éléments de base suivants :
• Une maquette (610) du train principal de l'aéronef comportant notamment les boggies ;
• Une représentation (620) de la voie de circulation à la même échelle que celle de la maquette du train principal ;
• Des index (630) matérialisant la position idéale des boggies externes du train principal lorsque l'avion est centré sur la voie de circulation.

10. Dispositif optoélectronique selon la revendication 9, **caractérisé en ce que** la maquette (610) du train principal occupe une position fixe dans le collimateur, la représentation (620) de la voie de circulation et les index (630) étant mobiles.

11. Dispositif optoélectronique selon la revendication 9, **caractérisé en ce que** la maquette (610) du train principal clignote lorsque le train principal se trouve trop près du bord de la voie de circulation.

12. Dispositif optoélectronique selon la revendication 9, **caractérisé en ce que** la représentation (620) de la voie de circulation est constituée d'un trait horizontal limité par deux traits verticaux matérialisant les limites de sécurité de la voie de circulation.

13. Dispositif optoélectronique selon la revendication 1, **caractérisé en ce que** le calculateur génère également un troisième ensemble (700) de symboles 2D représentant en vue de dessus la situation de l'aéronef sur la voie de circulation et comprenant les éléments de base suivants représentés à la même échelle :
• Des marques (100) disposées à intervalles réguliers en forme de rectangle représentant la ligne médiane de la voie de circulation ;
• Des marques latérales (200) de sécurité de voie de circulation, suite de plots disposés à intervalles réguliers, situés de part et d'autre de la ligne médiane de la voie de circulation à égale distance de celle ci ;
• Une maquette (720) du train d'atterrissage en vue de dessus, comportant l'ensemble du train principal et la roulette avant de l'aéronef ;
• Une maquette avion (710) représentant en vue de dessus l'aéronef.

14. Dispositif optoélectronique selon la revendication 13, **caractérisé en ce que** les différents boggies du train principal et la roulette avant de l'aéronef sont reliés par des segments de droite.

15. Dispositif optoélectronique selon la revendication 13, **caractérisé en ce que** ledit troisième ensemble (700) est généré pour compenser la perte de référence, lorsque les symboles 3D représentant des marques latérales de sécurité ne sont plus visibles en nombre suffisant dans le collimateur en raison de la position du poste de pilotage dans les virages.

16. Dispositif optoélectronique selon la revendication 15, **caractérisé en ce que** le critère d'affichage de ce troisième ensemble (700) est la disparition totale des marques axiales de voie de circulation dans le champ du collimateur.

## Patentansprüche

1. Optoelektronische Vorrichtung zur Unterstützung des Rollens eines Luftfahrzeugs, das sich auf einer Fahrbahn des Flughafens befindet, die Vorrichtung umfassend mindestens einen Blickfeld-Kollimator (Head-up-Kollimator) und ein Steuergerät, das für den Kollimator zweckbestimmt ist; das Steuergerät umfassend Mittel zur Anzeige von mindestens so genannten 3D-Symbolen auf dem Kollimator, die über die Fahrbahn überlagert sind und seitliche Sicherheitsmarkierungen darstellen, die in regelmäßigen Abständen angeordnet sind und sich auf beiden Seiten von der Mittellinie der Fahrbahn in gleichem Abstand zu dieser befinden, **dadurch gekennzeichnet, dass** die Markierungen in den Kurven grafische Darstellungen (200) mit variabler Höhe sind, die die Grenze der Fahrbahn darstellen, wobei die grafischen Darstellungen in einer angepassten Darstellung sind, d. h. sie überlagern exakt die äußeren Elemente, die sie repräsentieren.

2. Optoelektronische Vorrichtung nach Anspruch 1, **dadurch gekennzeichnet, dass** sich die grafischen Darstellungen (200) mit variabler Höhe ausschließlich auf der Außenseite der Kurven befinden.

3. Optoelektronische Vorrichtung nach Anspruch 1, **dadurch gekennzeichnet, dass** die maximale virtuelle Höhe der grafischen Darstellungen niedriger als die Höhe ist, auf der sich die Augen des Piloten über der Fahrbahn befinden, sodass alle grafische Darstellungen (200) im Kollimator unter der Horizontlinie (300) erscheinen.

4. Optoelektronische Vorrichtung nach Anspruch 1, **dadurch gekennzeichnet, dass** die grafischen Darstellungen (200) im Wesentlichen eine zylindrische Form haben, wobei die Mantellinie des Zylinders senkrecht zur Fahrbahn ist.

5. Optoelektronische Vorrichtung nach Anspruch 1, **dadurch gekennzeichnet, dass** die Höhe der grafischen Darstellungen (200) von der Einfahrt zur Ausfahrt der Kurve zunächst progressiv zunimmt, dann konstant bleibt und dann progressiv abnimmt.

6. Optoelektronische Vorrichtung nach Anspruch 1, **dadurch gekennzeichnet, dass** das Steuergerät auch eine erste Einheit (500) von 2D-Symbolen erzeugt, die eine Richtungsänderung darstellen, umfassend die folgenden Grundelemente:
• einen gebogenen Richtungspfeil (510), der die Richtung der Kurve sowie den Winkel des Bogens angibt;
• den Namen der nächsten Fahrbahn (520), wobei der Name am Ende des gebogenen Richtungspfeils platziert ist;
• die Textangabe der Kurve (530) bestehend aus dem Text "TURN" und aus dem verbleibenden Abstand vor der Annäherung an die Kurve, ausgedrückt in Metern.

7. Optoelektronische Vorrichtung nach Anspruch 6, **dadurch gekennzeichnet, dass** der gebogene Richtungspfeil (510) abnimmt, wenn das Luftfahrzeug in der Kurve voranschreitet, wobei der Name der Fahrbahn (520) so verschoben wird, dass er immer am Ende des gebogenen Pfeils positioniert bleibt.

8. Optoelektronische Vorrichtung nach Anspruch 6, **dadurch gekennzeichnet, dass** die erste Symboleinheit angezeigt wird, wenn sich das Luftfahrzeug weniger als 200 Meter von einer Kurve befindet, und am Ende dieser Kurve verschwindet.

9. Optoelektronische Vorrichtung nach Anspruch 1, **dadurch gekennzeichnet, dass** das Steuergerät auch eine zweite 2D-Symboleinheit (600) erzeugt, die die Situation des Hauptfahrwerks des Luftfahrzeugs darstellt und die folgenden Grundelemente umfasst:
• ein Modell (610) des Hauptfahrwerks des Luftfahrzeugs umfassend besonders die Drehgestelle;
• eine Darstellung (620) der Fahrbahn im selben Maßstab wie der des Modells des Hauptfahrwerks;
• Ablesemarken (630), die die ideale Position der äußeren Drehgestelle des Hauptfahrwerks darstellen, wenn das Flugzeug auf der Fahrbahn zentriert ist.

10. Optoelektronische Vorrichtung nach Anspruch 9,
**dadurch gekennzeichnet, dass** das Modell (610) des Hauptfahrwerks eine festgelegte Position im Kollimator einnimmt, wobei die Darstellung (620) der Fahrbahn und die Ablesemarken (630) mobil sind.

11. Optoelektronische Vorrichtung nach Anspruch 9,
**dadurch gekennzeichnet, dass** das Modell (610) des Hauptfahrwerks aufblinkt, wenn sich das Hauptfahrwerk zu nahe am Rand der Fahrbahn befindet.

12. Optoelektronische Vorrichtung nach Anspruch 9,
**dadurch gekennzeichnet, dass** die Darstellung (620) der Fahrbahn aus einem horizontalen Streifen begrenzt durch zwei vertikale Streifen besteht, die die Sicherheitsgrenzen der Fahrbahn darstellen.

13. Optoelektronische Vorrichtung nach Anspruch 1,
**dadurch gekennzeichnet, dass** das Steuergerät auch eine dritte Einheit (700) von 2D-Symbolen erzeugt, die eine Draufsicht der Situation des Luftfahrzeugs auf der Fahrbahn darstellen und die folgenden Grundelemente umfassen, die im selben Maßstab dargestellt werden:
• Markierungen (100), die in regelmäßigen Abständen in Rechteckform angeordnet sind und die Mittellinie der Fahrbahn darstellen;
• seitliche Sicherheitsmarkierungen (200) der Fahrbahn, eine Folge von grafischen Darstellungen, die sich in regelmäßigen Abständen auf beiden Seiten von der Mittellinie der Fahrbahn in gleichem Abstand zu dieser befinden;
• ein Modell (720) des Landungsfahrwerks in Draufsicht, umfassend die Einheit des Hauptfahrwerks und das Vorderrad des Luftfahrzeugs;
• ein Flugzeugmodell (710), das das Luftfahrzeug als Draufsicht darstellt.

14. Optoelektronische Vorrichtung nach Anspruch 13,
**dadurch gekennzeichnet, dass** die verschiedenen Drehgestelle des Hauptfahrwerks und das Vorderrad des Luftfahrzeugs durch gerade Segmente verbunden sind.

15. Optoelektronische Vorrichtung nach Anspruch 13,
**dadurch gekennzeichnet, dass** die dritte Einheit (700) erzeugt wird, um den Referenzverlust zu kompensieren, wenn die 3D-Symbole, die die seitlichen Sicherheitsmarkierungen darstellen, wegen der Position der Flugkanzel in den Kurven nicht mehr in ausreichender Anzahl im Kollimator zu sehen sind.

16. Optoelektronische Vorrichtung nach Anspruch 15, **dadurch gekennzeichnet, dass** das Anzeigekriterium dieser dritten Einheit (700) das vollständige Verschwinden der axialen Fahrbahnmarkierungen im Feld des Kollimators ist.

## Claims

1. Optoelectronic taxiing-aid device for aircraft located on an airport taxiway, the device comprising at least one head-up display and a processor dedicated to the display; the processor comprising means of displaying on the display at least so-called 3D symbols which are superimposed on the taxiway and which represent lateral safety marks, which are positioned at regular intervals and which are located at one side and the other of the centre line of the taxiway equidistant therefrom, **characterized in that**, at the turns, the marks are posts (200) of variable height, representing the limit of the taxiway, the posts being in a representation which conforms to, that is to say, which is superimposed precisely on, the external elements which they represent.

2. Optoelectronic device according to claim 1, **characterised in that** the posts (200) of variable height are located only on the outside of the turns.

3. Optoelectronic device according to claim 1, **characterized in that** the virtual maximum height of the posts is less than the height at which the eyes of the pilot are located above the taxiway so that all the posts (200) appear in the display under the horizon line (300).

4. Optoelectronic device according to claim 1, **characterised in that** the posts (200) are substantially cylindrical in shape, the generatrix of the cylinder being perpendicular to the taxiway.

5. Optoelectronic device according to claim 1, **characterised in that**, from entering the turn to leaving the turn, the height of the posts (200) first increases gradually, then remains constant, then decreases gradually.

6. Optoelectronic device according to claim 1, **characterized in that** the processor also generates a first set (500) of 2D symbols representing a change of direction, comprising the following basic elements:
• a curve direction arrow (510) indicating the direction of the turn and the angle of the curve;
• the name of the following taxiway (520), the name being placed at the end of the curve direction arrow;
• the textual indication (530) of the turn comprising the text "TURN" and the distance remaining before beginning the turn expressed in metres.

7. Optoelectronic device according to claim 6, **characterised in that** the curve direction arrow (510) decreases when the aircraft advances in the curve, the name of the taxiway (520) being displaced so as to always remain positioned at the end of the curve arrow.

8. Optoelectronic device according to claim 6, **characterized in that** the first set of symbols is displayed when the aircraft is less than 200 metres from a curve and disappears at the end of that curve.

9. Optoelectronic device according to claim 1, **characterized in that** the processor also generates a second set (600) of 2D symbols representing the situation of the main landing gear of the aircraft and comprising the following basic elements:
• a model (610) of the main landing gear of the aircraft, comprising in particular the bogies;
• a representation (620) of the taxiway to the same scale as that of the model of the main landing gear;
• indices (630) indicating the ideal position of the outer bogies of the main landing gear when the aeroplane is centred on the taxiway.

10. Optoelectronic device according to claim 9, **characterised in that** the model (610) of the main landing gear occupies a fixed position in the display, the representation (620) of the taxiway and the indices (630) being movable.

11. Optoelectronic device according to claim 9, **characterised in that** the model (610) of the main landing gear blinks when the main landing gear is too close to the edge of the taxiway.

12. Optoelectronic device according to claim 9, **characterised in that** the representation (620) of the taxiway comprises a horizontal line delimited by two vertical lines indicating the safety limits of the taxiway.

13. Optoelectronic device according to claim 1, **characterised in that** the processor also generates a third set (700) of 2D symbols representing a view from above of the situation of the aircraft on the taxiway and comprising the following basic elements represented to the same scale:
• rectangular marks (100) which are positioned at regular intervals and which represent the centre line of the taxiway;
• lateral taxiway safety marks (200), a series of posts positioned at regular intervals which are located at one side and the other of the centre line of the taxiway equidistant therefrom;
• a model (720) of the landing gear when viewed from above, comprising the whole of the main landing gear and the nose wheel of the aircraft;
• an aeroplane model (710) representing the aircraft when viewed from above.

14. Optoelectronic device according to claim 13, **characterised in that** the various bogies of the main landing gear and the nose wheel of the aircraft are connected by straight-line segments.

15. Optoelectronic device according to claim 13, **characterised in that** the third set (700) is generated to compensate for the reference loss when the 3D symbols representing lateral safety marks are no longer visible in sufficient numbers in the display because of the position of the cockpit in the turns.

16. Optoelectronic device according to claim 15, **characterised in that** the display criterion for this third set (700) is the total disappearance of the axial taxiway marks from the field of the display.
